# EUROPÄISCHE PATENTSCHRIFT

(11) **EP 3 657 984 B1**
(45) Veröffentlichungstag und Bekanntmachung des Hinweises auf die Patenterteilung: **25.12.2024**
(21) Anmeldenummer: 18746892.1
(22) Anmeldetag: 25.07.2018
(51) Int. Cl.: A47B 47/02, A47B 87/00, B25H 3/04, B25H 5/00, B60P 3/14

(54) **REGALMODULEINHEIT MIT SEITENWAND-LOCHPLATTEN UND VERBINDUNGSSTRUKTUR**
SHELF MODULE UNIT HAVING SIDE WALL PERFORATED PLATES AND CONNECTING STRUCTURE
UNITÉ DE MODULE D'ÉTAGÈRE PRÉSENTANT DES PLAQUES PERFORÉES DE PAROI LATÉRALE ET UNE STRUCTURE DE LIAISON

(30) Priorität: 28.07.2017 DE 102017117180
(43) Veröffentlichungstag der Anmeldung: 03.06.2020
(73) Patentinhaber: Adolf Würth GmbH & Co. KG, 74653 Künzelsau (DE); Würth International AG, 7000 Chur (CH)
(72) Erfinder: HOHL, Wolfgang, 74653 Künzelsau (DE); STARKE, Johannes, 74248 Ellhofen (DE)
(74) Vertreter: Dilg, Haeusler, Schindelmann Patentanwaltsgesellschaft mbH
(86) Internationale Anmeldenummer: PCT/EP2018/070159
(87) Internationale Veröffentlichungsnummer: WO 2019/020689

(56) Entgegenhaltungen:
- DE-A1- 1 654 589
- DE-A1- 1 654 589
- DE-U1- 202011 000 324
- DE-U1- 202011 000 324
- GB-A- 2 534 881
- GB-A- 2 534 881
- US-A1- 2004 045 484
- US-A1- 2004 045 484
- US-A1- 2007 145 865
- US-A1- 2007 145 865
- US-A1- 2008 012 375
- US-A1- 2015 145 394
- US-A1- 2015 145 394
- STEELSPAN: "Facebook - Steelspan Storage Systems", 6 June 2016 (2016-06-06), XP055753276, Retrieved from the Internet <URL:https://www.facebook.com/steelspanstoragesystems/photos/1079541612103411> [retrieved on 20201123]
- STEELSPAN: "Steelspan Storage Systems", 10 March 2019 (2019-03-10), XP055753277, Retrieved from the Internet <URL:https://web.archive.org/web/20190310103138if_/https://www.steelspan.com.au/images/documents/Steelspan-Storage-Systems-Brochure.pdf> [retrieved on 20201124]
- STEELSPAN STORAGE SYSTEMS: "Modular workbench with stainless steel pegboard", 6 June 2016 (2016-06-06), pages 1 - 1, XP093025839, Retrieved from the Internet <URL:https://www.facebook.com/steelspanstoragesystems/posts/pfbid02CmzdVPungm4cd7S9dBgxuzK5uQqvBBGut5unF8P658TxGBoimhn8yL7MPYkdQbhSl> [retrieved on 20230221]
- STEELSPAN STORAGE SYSTEMS: "Storage Components & Accessories", 1 March 2011 (2011-03-01), pages 1 - 10, XP093027508, Retrieved from the Internet <URL:http://steelspan.com.au> [retrieved on 20230228]
- STEELSPAN STORAGE SYSTEMS: "Home Garage Industrial Workshop Commercial Premises Storage Solutions", 1 January 2011 (2011-01-01), pages 1 - 1, XP093027515, Retrieved from the Internet <URL:https://steelspan.com.au/> [retrieved on 20230228]
- STEELSPAN STORAGE SYSTEMS: "Storage Components & Accessories", 1 March 2011 (2011-03-01), pages 1 - 10, XP093027508, Retrieved from the Internet <URL:http://steelspan.com.au> [retrieved on 20230228]
- STEELSPAN STORAGE SYSTEMS: "Modular workbench with stainless steel pegboard", 6 June 2016 (2016-06-06), pages 1 - 1, XP093025839, Retrieved from the Internet <URL:https://www.facebook.com/steelspanstoragesystems/posts/pfbid02CmzdVPungm4cd7S9dBgxuzK5uQqvBBGut5unF8P658TxGBoimhn8yL7MPYkdQbhSl> [retrieved on 20230221]
- STEELSPAN STORAGE SYSTEMS: "Home Garage Industrial Workshop Commercial Premises Storage Solutions", 1 January 2011 (2011-01-01), pages 1 - 1, XP093027515, Retrieved from the Internet <URL:https://steelspan.com.au/> [retrieved on 20230228]
- STEELSPAN STORAGE SYSTEMS: "Facebook - Modular workbench with stainless steel pegboard", 6 June 2016 (2016-06-06), pages 1 - 1, XP093025826, Retrieved from the Internet <URL:https://www.facebook.com/steelspanstoragesystems/photos/1079541588770080> [retrieved on 20230221]

## Beschreibung

Die Erfindung betrifft eine Regalmoduleinheit, ein Regal, ein Verfahren zum Montieren einer Regalmoduleinheit und eine Verwendung.

Es ist bekannt, Regale aus vertikalen Regalstangen und horizontalen Regalböden aufzubauen. Typischerweise werden vier Regalstangen verwendet, die jede in einer Ecke eines sich zwischen diesen erstreckenden Regalbodens angeordnet ist. Das Konzept aus Regalstangen und Regalböden ist nachteilig, wenn eine erhöhte Variabilität für einzulagernde Güter gewünscht wird. Sind die Güter von ihren Abmessungen her sehr variabel, so ist das bestehende Konzept nachteilig, weil es zu viel Raum verschenkt. Dies ist in Industrieanwendungen besonders nachteilig, weil dort häufig eine große Regalfläche nötig ist. Herkömmliche Regale sind aufgrund des Einsatzes von vertikalen Stangen kompliziert beim Aufbau. Um hohe Lasten in dem Regal einlagern zu können, müssen die Regalböden und die Regalstangen eine meist erhebliche Mindestdicke aufweisen. Alternativ können Verstärkungselemente verwendet werden, beispielsweise Versteifungsbleche für den Regalboden oder Versteifungswinkel zwischen Regalboden und Regalstange.

Bei Fahrzeugeinrichtungen für Handwerker ist es auch üblich, Seitenwände im Fahrzeug zu verankern, die durch Regalböden miteinander verbunden werden. Bei einer solchen Boxstruktur mit einem fünfseitig geschlossenen System tritt viel Material und daher viel Gewicht auf. Daraus resultiert auch eine aufwändige Herstellung.

DE 83 36 744 U1 offenbart eine Regalmoduleinheit mit zwei einander gegenüberliegende Lochplatten als Seitenwände und Kopplungsstrukturen zum Koppeln der Regalmoduleinheit mit einer gleichartigen Regalmoduleinheit. Die Regalmoduleinheit ist wannenartig als eine einstückige Einheit ausgebildet.

Der Gesamtkatalog *"*Die Spezialisten der Fahrzeugeinrichtungen" Synchro System, 2016, offenbart ebenfalls eine Regalmoduleinheit mit zwei einander gegenüberliegenden Seitenwänden und mehreren senkrecht zu den Seitenwänden verlaufenden Verbindungsstrukturen mit Endbereichen zum Verbinden der Seitenwände. Die Seitenwände haben Falze mit Löchern, die zum Koppeln der Regalmoduleinheit mit einer gleichartigen Regalmoduleinheit verwendet werden können.

DE 14 29 689 A offenbart eine Regalmoduleinheit mit zwei einander gegenüberliegenden Seitenwänden und mehreren senkrecht zu den Seitenwänden verlaufenden Decken mit Endbereichen zum Verbinden der Seitenwände.

DE 10 2014 105 723 A1 offenbart ein Regalsystem, das zur Anbringung in einem Kraftfahrzeug, insbesondere in einem Servicefahrzeug geeignet ist. Das Regalsystem umfassend wenigstens eine Regalkonstruktion sowie eine darin aufnehmbare Kipplade, wobei die Regalkonstruktion im Bereich eines in den Innenraum des Kraftfahrzeugs hineinragenden Bauteils angebracht werden kann. Das Regalsystem hat Seitenwände, die durch Verbindungsstrukturen verbunden sind.

Die Firma Steelspan Storage Systems offenbart ebenfalls auf ihrer Webseite (https:// steelspan.com.au), bzw. in ihrem Katalog metallische Regalmoduleinheiten mit Lochplatten.

Es ist eine Aufgabe der vorliegenden Erfindung, ein flexibles und leichtgewichtiges Regalsystem mit einem hohen Aufnahmevolumen bereitzustellen.

Diese Aufgabe wird durch die Gegenstände gemäß den unabhängigen Patentansprüchen gelöst. Bevorzugte Ausgestaltungen ergeben sich aus den abhängigen Patentansprüchen.

Der Anspruch 1 definiert die Merkmale eines erfindungsgemäßen Regalmoduleinheit. 1f

Ebenfalls definiert Anspruch 11 die Merkmale eines erfindungsgemäßen Verfahrens.

Gemäß einem Ausführungsbeispiel ist ein Regal bereitgestellt, das eine Mehrzahl von miteinander verbundenen Regalmoduleinheiten mit den oben beschriebenen Merkmalen aufweist. Die Verbindung oder Kopplung kann mittels der Kopplungsstrukturen der Regalmoduleinheiten ausgebildet werden.

Gemäß einem anderen Ausführungsbeispiel der vorliegenden Erfindung wird eine Regalmoduleinheit mit den oben beschriebenen Merkmalen als Basiseinheit zum Aufbau eines Regals verwendet.

Im Rahmen der vorliegenden Erfindung kann unter dem Begriff "Regalmoduleinheit" ein modulartiges Bauteil verstanden werden, das modular mit anderen identischen, gleichartigen und/oder anders gearteten Moduleinheiten zu einem Regal zusammengebaut werden kann. In diesem Sinne bildet eine Regalmoduleinheit, eine (insbesondere kleinste) Zelle eines Regals. Eine solche Regalmoduleinheit kann Vorkehrungen haben, die es ihr ermöglicht, mit anderen Regalmoduleinheiten zu dem Regal zusammengebaut zu werden.

Im Rahmen der vorliegenden Anmeldung wird unter dem Begriff "Regal" ein Gebilde verstanden, das als Lagervorrichtung zum Lagern von Lagergut dient und zu diesem Zweck mindestens ein Regalfach aufweisen kann. Auf einem solchen Regalfach können die Lagergüter direkt oder in Lagerboxen oder dergleichen gelagert werden. Ein Regal kann nach außen hin offen sein oder kann Türen zum Verdecken oder Verschließen von Teilen des Regals oder des gesamten Regals aufweisen.

Im Rahmen der vorliegenden Anmeldung wird unter dem Begriff "Verbindungsstruktur" insbesondere ein Bauelement verstanden, das dazu dient, Druck- und Schubkräfte abzuleiten und eine starre Verbindung zwischen Seitenwand-Lochplatten auszubilden. Somit kann eine Verbindungsstruktur ein Hohlprofil, eine Stange, ein Pfeiler, ein Pfosten, eine Strebe oder ein Balken sein und kann die Seitenwände stützen und starr koppeln.

Gemäß einem exemplarischen Ausführungsbeispiel der Erfindung ist eine Regalmoduleinheit geschaffen, die aus zwei Lochplatten und mindestens einer diese verbindenden Verbindungsstruktur aufgebaut ist. Eine solche Regalmoduleinheit hat aufgrund des Vorsehens der Lochplatten ein hohes Maß an Stabilität. Die mindestens eine, vorzugsweise mehreren Verbindungsstrukturen, mit denen die Lochplatten verbunden sind, sorgen für eine Versteifung der Regalmoduleinheit. Das Verwenden von Lochplatten und (vorzugsweise als Hohlprofile, Längsprofile oder gebogene Profile) ausgebildeten Verbindungsstrukturen ermöglicht darüber hinaus eine leichtgewichtige Konfiguration, die zum Beispiel bei Verwendung der Regalmoduleinheit in einem Fahrzeug besonders vorteilhaft ist. Außerdem schafft eine Anordnung aus zwei zueinander beabstandeten und vorzugsweise parallel zueinander angeordneten vertikalen Lochplatten, die mittels einfacher und leichtgewichtiger Verbindungsstrukturen verbunden sind, eine Basiszelle für ein Regal, bei der ein sehr großer Volumenanteil für das Lagern von Lagergut und/oder das Einfügen von weiteren Modulen oder Bauteilen zum benutzerdefinierten Aufbau eines Regals verwendet werden kann. Das Eigenvolumen der Konstituenten der Regalmoduleinheit ist nämlich sehr gering. Auf diese Weise kann eine einfache Konstruktion mit einer effizienten Volumenausnutzung kombiniert werden. Gleichzeitig kann eine hohe Stabilität und Versteifung der Regalmoduleinheit erreicht werden.

Mit einer Regalmoduleinheit gemäß einem exemplarischen Ausführungsbeispiel der Erfindung kann eine besonders hohe Variabilität für einzulagernde Güter bei äußerst effizienter Ausnutzung des zur Verfügung stehenden Raums erreicht werden. Besonders vorteilhaft ist die Kombination aus Seitenwänden in Form von Lochblechen mit sich dazwischen erstreckenden Profilen als Verbindungsstruktur. Die Seitenwände stellen eine hohe Stabilität bereit, da sie aus Metall oder ähnlichem hergestellt werden können. Dennoch sind die Seitenwände relativ leicht, wenn Sie als Lochbleche ausgebildet werden. Zwischen den Seitenwänden verlaufen die Profile oder Verbindungsstrukturen, deren Länge variabel ist, so dass sich auf einfache Weise verschieden breite Regale realisieren lassen. Ein Regal kann somit modulartig aus entsprechend konfigurierten und zusammengestellten Regalmoduleinheiten aufgebaut werden. Durch das Einziehen von Zwischenwänden kann auch eine Regal-in-Regal-Geometrie bzw. eine Regalmoduleinheit-in-Regalmoduleinheit-Geometrie erreicht werden, was zu einer weiter erhöhten Variabilität des Systems führt. Ein entsprechendes Regal kann in einfacher Weise und von nur einer Person aufgestellt werden. Für den Grundkörper bzw. eine Regalmoduleinheit ist es nämlich ausreichend, die beiden Seitenwände aufzustellen und durch mindestens ein (bevorzugt zwei oder vier Profile bzw. Verbindungsstrukturen) miteinander zu verbinden, um einen Grundkörper des Regals aufzubauen. Der auf diese Weise hergestellte Grundkörper kann nun sehr variabel benutzerdefiniert ausgestaltet bzw. zur Erfüllung von gewünschten Lagerfunktionen konfiguriert werden. Ein besonderer Vorteil einer Regalmoduleinheit gemäß einem exemplarischen Ausführungsbeispiel besteht in einer besonders großen Variabilität eines aus einer oder mehreren Regalmoduleinheiten aufbaubaren Gesamtregals. Dies führt mit Vorteil auch zu einem besonders geringen Gewicht. Mit dem System aus Regalmoduleinheiten sind auch ganz unterschiedliche Größen darstellbar. Ferner ist dadurch eine gut planbare und montierbare Boxstruktur geschaffen, die sich insbesondere auch zur Verwendung in einem Automobil eignet.

Anschaulich können Ausführungsbeispiele der Erfindung als Mittelding zwischen einem Regal und einem Boxensystem eingesehen werden. Eine besonders hohe Stabilität resultiert dabei aus den stabilen und dennoch leichtgewichtigen Seitenwänden, die als Lochplatten ausgebildet werden können. Eine hohe Variabilität kann durch insbesondere C-förmige Schienen (insbesondere Linearschienen) als Verbindungsstrukturen zwischen den Seitenwänden erreicht werden. Aufgrund der beschriebenen Konstruktion ist es auch möglich, ein Regal aus einer oder mehreren Regalmoduleinheiten vorzumontieren (auch in Unterabschnitten). Darüber hinaus ist ein einfacher Versand von Teilabschnitten eines Regals möglich. Auch eine einfache Fertigung von Teilabschnitten des Regals an verschiedenen Standorten ist mit dem beschriebenen Baukastensystem möglich. Ein Aufbau eines jeweiligen Regals kann dann jeweils am Montageort bzw. Einsatzort erfolgen.

Im Weiteren werden zusätzliche Ausführungsbeispiele der Regalmoduleinheit, des Regals, des Verfahrens und der Verwendung beschrieben.

Gemäß einem Ausführungsbeispiel können die Lochplatten vertikal angeordnet werden und/oder kann die mindestens eine Verbindungsstruktur horizontal angeordnet werden. Diese Montagegeometrie stellt einen Paradigmenwechsel gegenüber dem herkömmlichen Ansatz dar, horizontale flächige Regalfächer mit vertikalen Regalstangen zu implementieren. Stattdessen werden gemäß exemplarischen Ausführungsbeispielen die Regalseiten flächig und die Verbindungsstrukturen horizontal und im Wesentlichen eindimensional orientiert. Dies führt bei hoher Stabilität zu einer besonders effizienten Ausnutzung des zur Verfügung stehenden Stauvolumens. Sowohl die Montagelöcher in den Lochplatten als auch die horizontalen Verbindungsstrukturen können zur Aufnahme von eigentlichen Lageraufnahmen des Regals dienen.

Gemäß einem Ausführungsbeispiel kann die Regalmoduleinheit eine Mehrzahl von, insbesondere vier, Verbindungsstrukturen zum Verbinden der Lochplatten miteinander aufweisen. Die Verbindungsstrukturen können als linear verlaufende langestreckte Profile ausgebildet sein, die parallel zueinander verlaufend angeordnet werden. Eine jeweilige Verbindungsstruktur kann aus einer gebogenen (und vorzugsweise gestanzten) Metallplatte hergestellt werden, so dass sie teilumfänglich zum Ausbilden eines stabilen Profils dient und dennoch innen hohl und somit leichtgewichtig ist.

Gemäß einem Ausführungsbeispiel kann die mindestens eine Verbindungsstruktur ein C-Profil aufweisen. Eine solche C-förmige Konfiguration kann auf Basis eines gebogenen Blechs gefertigt werden und erlaubt daher eine kostengünstige und leichtgewichtige Herstellung.

Gemäß einem Ausführungsbeispiel kann in der mindestens einen Verbindungsstruktur ein Kabel geführt sein. Daher erlaubt das Ausgestalten einer zum Beispiel als Hohlprofil konfigurierten Verbindungsstruktur auch das Führen von Kabeln in einem Kabelkanal, der im Inneren einer solchen Verbindungsstruktur gebildet werden kann. Derartige Kabel können zum Beispiel in dem Kabelkanal im Inneren der Verbindungsstruktur geführt werden, um Leuchten, Sensoren oder andere elektrische Energieabnehmer mit elektrischer Energie zu versorgen und/oder um Steuer- oder Sensorsignale zu übertragen.

Gemäß einem Ausführungsbeispiel kann die Lochplatte rechteckförmig sein. Rechteckige oder sogar quadratische Lochplatten eignen sich besonders gut für einen modularen Aufbau. Verbindungsstrukturen können vorzugsweise in Eckbereichen mit rechteckigen Lochplatten verbunden werden, um einen maximalen Aufnahmeraum von Lagergut und anderen Regalkomponenten im Inneren der Regalmoduleinheit zu erreichen.

Gemäß einem Ausführungsbeispiel kann die Regalmoduleinheit mindestens ein steifigkeitserhöhendes Winkelstück, insbesondere eine Dreiecksplatte, in einem Eckbereich zwischen einer der Lochplatten und einer der mindestens einen Verbindungsstruktur aufweisen. Ein solches Winkelstück kann zum Beispiel in Eckbereichen der Regalmoduleinheit montiert werden und zum Beispiel aus einem metallischen Material (zum Beispiel einem Blech) hergestellt sein. Insbesondere bei Verwendung eines dreieckigen Winkelstücks kann die Stabilität in den Eckbereichen der Regalmoduleinheit, wo die Lochplatte vorzugsweise an die Verbindungsstrukturen angeschlossen ist und daher besonders hohe Kräfte wirken können, gezielt erhöht werden.

Gemäß einem Ausführungsbeispiel kann das Regal mindestens einen steifigkeitserhöhenden Querstreben (insbesondere Quergurt) aufweisen, der sich diagonal zwischen Eckbereichen von Lochplatten, insbesondere unterschiedlicher Regalmoduleinheiten, erstrecken kann. Querstreben, die sich vorzugsweise diagonal zwischen Eckbereichen von miteinander verbundenen Lochplatten erstrecken können, erlauben mit geringem Zusatzgewicht eine signifikante Erhöhung der Versteifung eines aus mehreren Regalmoduleinheiten aufgebauten Regals. Dadurch können auch schwergewichtige Lagergüter in der Regalmoduleinheit bzw. dem Regal aufgenommen werden, ohne dass das Regal instabil wird. Ferner ermöglicht dies eine stabile Verbindung auch einer großen Anzahl von Regalmoduleinheiten zu einem komplexen Regal.

Gemäß einem Ausführungsbeispiel können die Kopplungsstrukturen der Regalmoduleinheit mindestens einen Einführzapfen aufweisen. Dieser kann zum Beispiel, insbesondere zum Koppeln, zur Vorjustage und/oder zum Stapeln von mehreren gleichartigen Regalmoduleinheiten, in zumindest einem Eckbereich von zumindest einer der Lochplatten vorgesehen ist. Insbesondere kann ein Einführzapfen dort in eine Aussparung eines Hohlprofilabschnitts der Lochplatte eingeführt sein oder einführbar sein. Ein derartiger Einführzapfen kann zum Beispiel in vier Eckbereichen einer Lochplatte vorgesehen sein und dort über die Lochplatte nach außen hinausstehen. Ein derartiger Einführzapfen kann konfiguriert sein, mit einem korrespondierenden Verbindungselement einer anderen Lochplatte, einer Verbindungsstruktur oder eines anderen Bauteils eines modular aufgebauten Regals verbunden zu werden. Dadurch kann ein baukastenartiges Stecksystem erzeugt werden, mit dem ein Benutzer spezifisch zugeschnitten auf eine jeweilige Applikation beliebig gestaltete Regale entwerfen und gestalten kann.

Insbesondere können die Kopplungsstrukturen gemäß einem exemplarischen Ausführungsbeispiel der Regalmoduleinheit ferner mindestens eine von einem Einführzapfen freie weitere Aussparung in zumindest einem anderen Eckbereich von zumindest einer der Lochplatten aufweisen. Diese weitere Aussparung, die insbesondere zum Stapeln von mehreren gleichartigen Regalmoduleinheiten eingesetzt werden kann, kann von einem Einführzapfen mit den oben beschriebenen Merkmalen, der einer anderen gleichartigen Regalmoduleinheit zugeordnet ist, beim Stapeln bzw. übereinander Anordnen formschlüssig in Eingriff genommen werden. Anders ausgedrückt kann eine Regalmoduleinheit zum Beispiel an einer Hauptfläche in vier Eckbereichen (je zwei pro Lochplatte) Einführzapfen aufweisen (die dort in Aussparungen von Hohlprofilabschnitten der Lochplatten eingeführt sein können) und an einer gegenüberliegenden Hauptfläche in vier anderen Eckbereichen (je zwei pro Lochplatte) die weiteren Aussparungen aufweisen. Auf diese Weise können mehrere gleichartige Regalmoduleinheiten übereinander montiert bzw. aufeinander gestapelt werden, indem die Einführzapfen an der Hauptfläche einer der Regalmoduleinheiten in die Aussparungen an der entsprechenden anderen Hauptfläche der anderen Regalmoduleinheit eingeführt werden.

Gemäß einem Ausführungsbeispiel kann die Regalmoduleinheit mindestens einen Haken aufweisen, der, insbesondere zum Anhängen eines Körpers an die Regalmoduleinheit, in ein Loch der mindestens einen Lochplatte einsteckbar oder einhängbar ist. Solche Haken können in die Löcher der Lochplatten eingehängt werden und dadurch mit geringem Aufwand eine flexible Befestigungsmöglichkeit für weitere Körper an der Regalmoduleinheit oder dem Regal bereitstellen.

Gemäß einem Ausführungsbeispiel kann mindestens eine der Lochplatten eine Vielzahl von Löchern aufweisen. Die Vielzahl von Löchern kann matrixartig angeordnet sein. Das Vorsehen einer Vielzahl von Löchern, insbesondere mindestens zehn, weiter insbesondere mindestens dreißig oder mindestens hundert Löcher pro Lochplatte, führt zum einen zu einer leichtgewichtigen Ausgestaltung der Lochplatte und fördert simultan den baukastenartigen oder modulartigen Charakter der Regalmoduleinheit. Die Löcher der Lochplatte können zum Beispiel zum Verbinden von Verbindungsstrukturen der Regalmoduleinheit, zum Einhängen von Haken und/oder zum Anbringen von anderen Bauteilen (zum Beispiel Regalböden) zwischen zwei Lochplatten dienen. Sind die Löcher matrixartig in Zeilen und Spalten angeordnet, fluchten jeweils Löcher parallel angeordneter und beabstandeter Lochplatten und sind daher jeweils in einem festen Abstand zueinander angeordnet. Dies vereinfacht weiter die Möglichkeit, Verbindungsstrukturen oder andere Körper zwischen zwei Lochplatten anzubringen.

Gemäß einem Ausführungsbeispiel kann die Regalmoduleinheit zum Beispiel einen Schraubstock aufweisen, der an mindestens einer der Lochplatten montiert ist. Obgleich ein Schraubstock ein erhebliches Eigengewicht haben kann, erlaubt es die stabile und leichtgewichtige Konfiguration der Regalmoduleinheit dennoch, solche schweren Körper an einer Lochplatte anzubringen. Andere Werkzeuge, Lampen etc. können ebenfalls in der beschriebenen Weise an den Lochplatten angebracht werden.

Gemäß einem Ausführungsbeispiel kann die Regalmoduleinheit mindestens eine Schubladenführung aufweisen, die an mindestens einer der Lochplatten angebracht ist. Insbesondere kann die Schubladenführung an mindestens einem Loch von mindestens einer der Lochplatten angebracht sein. Eine solche Schubladenführung kann aus einem starr bzw. fest oder befestigt an einer Lochplatte angebrachten Körper und aus einem anderen Körper aufgebaut sein, der beweglich an dem starren Körper der Schubladenführung angebracht ist. Beide Körper können als Schiene ausgebildet sein. Die bewegliche Schiene kann in der starren Schiene geführt werden, oder umgekehrt. Ein Kugellager oder dergleichen kann ein besonders leichtgängiges Ausziehen und Einschieben der Schublade bewerkstelligen. Mit Vorteil können zwei Schubladenführungen, die jeweils aus zwei kooperierenden Körpern zusammengesetzt sind, an gegenüberliegenden Innenflächen von zwei Lochplatten befestigt werden. Wenn ein Schubladenkorpus mit den beiden beweglichen Körpern der Schubladenführungen verbunden wird, kann die Schublade aus der Regalmoduleinheit bzw. dem Regal herausgefahren oder in diese(s) hineingefahren werden.

Gemäß einem Ausführungsbeispiel kann eine Verbindung zwischen der mindestens einen Verbindungsstruktur und den Lochplatten mittels einer Steckverbindung oder einer Schraubverbindung ausgebildet sein. Bei Ausbilden einer Steckverbindung kann zwischen der jeweiligen Lochplatte und der jeweiligen Verbindungsstruktur die Verbindung durch das Ausbilden eines bloßen Formschlusses oder unter Ausbilden einer Rastverbindung erfolgen. Eine Schraubverbindung oder eine Nietverbindung stellt eine noch zuverlässigere Verbindung zwischen Lochplatte und Verbindungsstruktur sicher.

Gemäß einem Ausführungsbeispiel kann die Regalmoduleinheit mindestens eine Lagerbox aufweisen, die in der Regalmoduleinheit aufgenommen ist. Eine solche Lagerbox kann zum Beispiel aus Kunststoff oder Karton hergestellt sein. Lagerboxen können in die Regalmoduleinheit bzw. das Regal eingestellt werden und können Lagergut (zum Beispiel Schüttgut wie Schrauben, Dübel oder Nägel) aufnehmen. Wenn in die Regalmoduleinheit zum Beispiel Regalfächer eingeführt werden, die beispielsweise durch die Lochplatten und/oder die Verbindungsstrukturen gestützt werden können, können Lagerboxen auf solche Regalfächer aufgesetzt werden.

Gemäß einem Ausführungsbeispiel kann zwischen den Endbereichen der mindestens einen Verbindungsstruktur eine (insbesondere vertikal orientierte) Zwischenwand, insbesondere eine zusätzliche Lochplatte, befestigt sein. Der modulartige Charakter der Regalmoduleinheit wird besonders dadurch gestärkt, dass eine oder mehrere Zwischenwände zwischen zwei durch Verbindungsstrukturen verbundene Lochplatten eingeführt werden. Während die beiden die Grundzelle der Regalmoduleinheit bildenden Lochplatten vorzugsweise an Endbereichen der Verbindungsstruktur(n) befestigt sind, kann sich die Zwischenwand auch im Bereich eines Zentralbereichs einer oder mehrerer Verbindungsstrukturen befinden. Zum Beispiel kann die Zwischenwand parallel zu den beiden Lochplatten orientiert sein, welche die seitlichen Begrenzungen der Regalmoduleinheit bilden. Durch das Einziehen einer oder mehrerer Zwischenwände können Kompartments abgetrennt werden, die zum Beispiel mit Lagergut unterschiedlicher Typen befüllt werden können. Die Zwischenwände steigern weiter die Stabilität der Regalmoduleinheit.

Gemäß einem Ausführungsbeispiel kann zwischen oberen und unteren Endbereichen der Lochplatten mindestens eine Bodenwand bzw. ein horizontales Regalfach befestigt sein. Eine solche Bodenwand bzw. ein solches Regalfach kann dazu dienen, darauf Lagerboxen, Lagergut oder andere Körper abzustellen. Es ist möglich, pro Regalmoduleinheit eine oder mehrere Bodenplatten oder Regalfächer vorzusehen, die dann zueinander vertikal beabstandet sein können. Gemäß einem Ausführungsbeispiel kann die mindestens eine Verbindungsstruktur mit Endbereichen (insbesondere Eckbereichen oder Kantenbereichen) und/oder mit Mittenbereichen (zum Beispiel einem Zentrum) der Lochplatten verbunden sein. Bevorzugt sind die Enden der Verbindungsstrukturen mit den Ecken der Lochplatten verbunden, da dann ein besonders großes Stauvolumen erhalten werden kann. Die Enden der Verbindungsstrukturen können dann selbst Verbindungsstrukturen zum Verbinden mit den Lochplatten aufweisen, vorzugsweise mit Eckbereichen der Lochplatten. Alternativ ist es aber auch möglich, eine Lochplatte mit einem zentralen Bereich einer Verbindungsstruktur zu verbinden. Die Flexibilität der Regalmoduleinheit wird dadurch weiter erhöht.

Erfindungsgemäß haben zwei einander gegenüberliegende Längsseiten der Lochplatten jeweils einen Kanal, insbesondere einen Versteifungskanal und/oder einen Kabelkanal, aufweisen. Die Lochplatten selbst können auch aus einer gebogenen und gestanzten Metallplatte einfach und kostengünstig hergestellt sein. Endbereiche einer solchen Lochplatte können dann zum Ausbilden von einstückigen Hohlprofilen umgebogen werden, zum Beispiel zur Ausbildung von Rechteckprofilen, C-Profilen, U-Profilen oder dergleichen. Auf diese Weise kann die Stabilität der Lochplatten entlang ihrer Seitenränder signifikant erhöht werden, was auf eine Erhöhung der Stabilität der Regalmoduleinheit und des Regals als Ganzes ausstrahlt. Außerdem können solche Hohlprofilabschnitte der einstückigen Lochplatten zum Führen von Kabeln oder zur Aufnahme anderer Körper dienen.

Gemäß einem Ausführungsbeispiel ist die Regalmoduleinheit mit im Wesentlichen (d.h. bis auf kleine Abweichungen hiervon, zum Beispiel aus Eckbereichen hervorstehende Einführzapfen) quaderförmlicher Gestalt mit vier offenen Seitenflächen ausgebildet. Dies stellt eine besonders gute Zugänglichkeit zum Inneren der Regalmoduleinheit sicher. Die anderen beiden Seitenflächen können im Wesentlichen (d.h. bis auf die Löcher in den Lochplatten) geschlossen sein. Gemäß einem Ausführungsbeispiel können entlang jeder von sechs rechteckförmigen Seitenflächen der Regalmoduleinheit mindestens zwei, insbesondere genau zwei, Seitenkanten als Hohlprofil ausgebildet sein. Dadurch kann bei ganz geringem Platzbedarf ein hohes Aufnahmevolumen erreicht werden und eine äußerst stabile Regalmoduleinheit erhalten werden.

Erfindungsgemäß liegen die zwei, insbesondere genau zwei, als Hohlprofil ausgebildeten Seitenkanten einander gegenüber.

Dadurch ist eine symmetrische Krafteinleitung bei einwirkenden mechanischen Lasten, zum Beispiel von Lagergut, bewirkt.

Gemäß einem Ausführungsbeispiel können die zwei, insbesondere genau zwei, als Hohlprofil ausgebildeten Seitenkanten einander parallel gegenüber liegen. Dies stellt eine symmetrische Konfiguration der Regalmoduleinheit sicher. Gemäß einem Ausführungsbeispiel können die Hohlprofile zwei zueinander parallele Hohlprofilringe bilden. Diese können eine jeweils geschlossene Rechteckprofilstruktur bilden. Die beiden Hohlprofilringe stellen kompakte Stabilitätsanker der Regalmoduleinheit dar und sind umfänglich besonders robust.

Gemäß einem Ausführungsbeispiel können die nicht als Hohlprofile ausgebildeten verbleibenden Seitenkanten als abgewinkeltes Profil, insbesondere als rechtwinklig abgewinkeltes Profil, ausgebildet sein. Dadurch kann auch in diesen, nicht als Hohlprofil ausgebildeten Seitenkanten eine gewisse Stabilität erreicht werden, ohne dass das Lagervolumen hierdurch unerwünscht verringert wird.

Gemäß einem Ausführungsbeispiel kann bei dem Regal eine der Regalmoduleinheiten innerhalb einer anderen der Regalmoduleinheiten angeordnet sein. Die Möglichkeit des Ausbildens einer solchen Modul-in-Modul-Konfiguration veranschaulicht, wie viele Möglichkeiten ein Benutzer beim Kombinieren von Regalmoduleinheiten gleicher Dimension oder unterschiedlicher Dimensionen hat. Alternativ oder ergänzend ist es jedoch auch möglich, mehrere solche Regalmoduleinheiten nebeneinander, übereinander und/oder hintereinander anzuordnen, um Regale in zwei oder drei Raumdimensionen benutzerspezifisch auszubilden.

Im Folgenden werden exemplarische Ausführungsbeispiele der vorliegenden Erfindung mit Verweis auf die folgenden Figuren detailliert beschrieben.
Figur 1 zeigt eine Regalmoduleinheit gemäß einem exemplarischen Ausführungsbeispiel der Erfindung.
Figur 2 zeigt eine andere räumliche Darstellung der Regalmoduleinheit gemäß Figur 1.
Figur 3 zeigt eine Unteransicht der Regalmoduleinheit gemäß Figur 1 und Figur 2.
Figur 4 zeigt ein Regal gemäß einem exemplarischen Ausführungsbeispiel der Erfindung, das aus mehreren Regalmoduleinheiten aufgebaut ist.
Figur 5 zeigt eine rückseitige Ansicht des Regals gemäß Figur 4.
Figur 6 zeigt ein Regal gemäß einem anderen exemplarischen Ausführungsbeispiel der Erfindung, das aus mehreren Regalmoduleinheiten aufgebaut ist.

Gleiche oder ähnliche Komponenten in unterschiedlichen Figuren sind mit gleichen Bezugsziffern versehen.

Bevor bezugnehmend auf die Figuren exemplarische Ausführungsbeispiele beschrieben werden, sollen einige grundlegende Überlegungen zusammengefasst werden, basierend auf denen exemplarische Ausführungsbeispiele der Erfindung abgeleitet worden sind.

Gemäß einem exemplarischen Ausführungsbeispiel der Erfindung ist eine Regalmoduleinheit geschaffen, bei der die Seitenwände aus Lochblechen und die sich dazwischen erstreckenden Profile als Verbindungsstrukturen ausgebildet sind. Die vorzugsweise vertikal orientierten Seitenwände geben eine ausreichende Stabilität, da sie aus Metall oder ähnlichem hergestellt werden können. Die Seitenwände können zudem relativ leicht ausgebildet werden, da sie als Lochbleche gefertigt werden können. Zwischen den Seitenwänden verlaufen Profile in Form von (vorzugsweise horizontalen) Verankerungsstreben oder dergleichen, deren Länge variabel sein kann, so dass sich auf einfache Weise verschieden breite Regale realisieren lassen. Ein Regal gemäß einem exemplarischen Ausführungsbeispiel kann somit modulartig aufgebaut werden. Das bedarfsweise Einziehen von Zwischenwänden führt zu einer weiter erhöhten Variabilität des gesamten Systems. Das Regal kann werkzeuglos und von nur einer Bedienperson montiert werden. Auf Basis einer Regalmoduleinheit aus Lochplatte und Verbindungsstrukturen können, zum Beispiel durch das Einfügen von geeigneten Zwischenwänden und/oder von Zwischenböden und/oder von weiteren Profilen, verschiedene Anwendungskonfigurationen des Regals bereitgestellt werden. Es können zum Beispiel Schubladen und/oder Regalböden eingesetzt werden. Es ist auch möglich, Lagerboxen einzustellen. In einem Ausführungsbeispiel kann ein kleines Regal bzw. eine kleine Regalmoduleinheit in einem größeren Regal bzw. einer größeren Regalmoduleinheit eingebaut werden. Bedarfsweise können Türen angebaut werden, um einen insbesondere abschließbaren Schrank zu bilden.

Durch die Verwendung von Lochblechen als Seitenwände ist auch für die Seitenwände eine Vielzahl von Anwendungsmöglichkeiten ermöglicht. Es können Haken, etc., in die Löcher des Lochbleches gesteckt werden, um diverse Gegenstände daran zu hängen, wie beispielsweise Kabel, etc. Da die Lochbleche eine relativ hohe Steifigkeit in vertikaler Richtung haben, können auch schwere Gegenstände angebracht werden, wie beispielsweise ein Schraubstock. Durch das Vorsehen der Lochstruktur ist eine einfache Möglichkeit für ganz verschiedene Verbindungsmöglichkeiten gegeben.

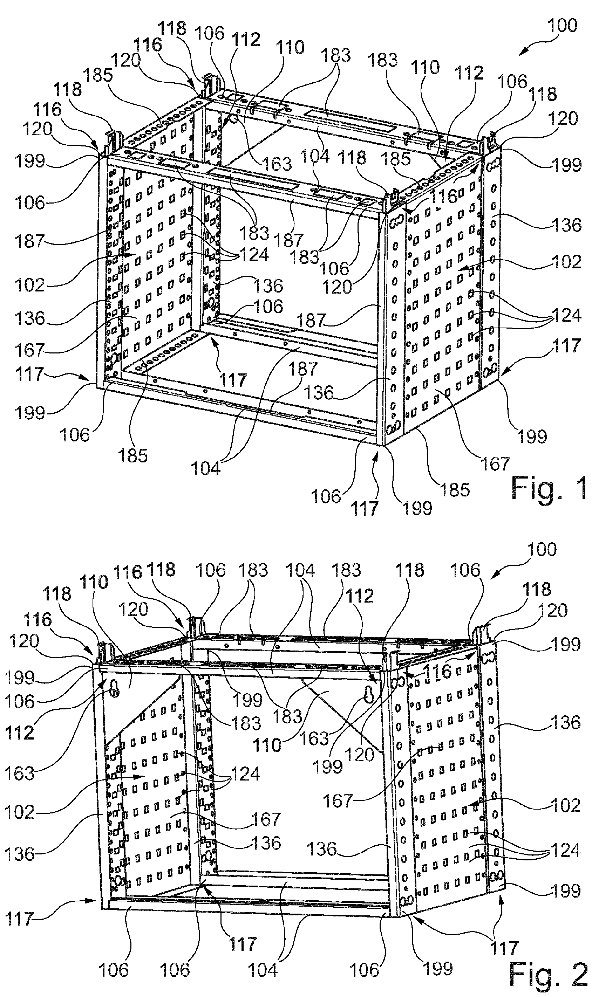

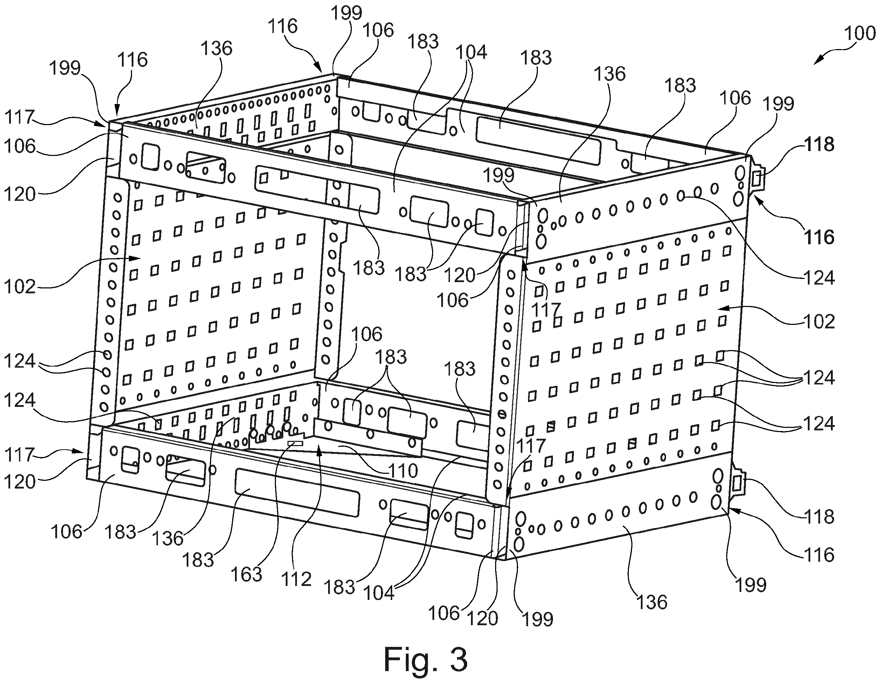

**Figur 1** zeigt eine Vorderseite einer Regalmoduleinheit 100 gemäß einem exemplarischen Ausführungsbeispiel der Erfindung. **Figur 2** zeigt eine rückseitige Darstellung der Regalmoduleinheit 100 gemäß Figur 1. **Figur 3** zeigt eine Unteransicht der Regalmoduleinheit 100 gemäß Figur 1 und Figur 2.

Die in Figur 1 und Figur 2 dargestellte Regalmoduleinheit 100 weist genau zwei rechteckige, vertikal und zueinander parallel angeordnete sowie einander beabstandet gegenüberliegende metallische Lochplatten 102 als vertikale Seitenwände der Regalmoduleinheit 100 auf. Vier als (insbesondere Hohl-) Stangen oder Längsprofile ausgebildete, zueinander parallel angeordnete und zu den Hauptflächen der beiden Lochplatten 102 orthogonal verlaufende Verbindungsstrukturen 104 mit jeweils zwei einander gegenüberliegenden Endbereichen 106 sind zum Verbinden der Lochplatten 102 an letzteren befestigt. Genauer gesagt ist ein jeweiliger Endbereich 106 einer Verbindungsstruktur 104 an einem jeweiligen Eckbereich 199 einer jeweiligen Lochplatte 102 befestigt. Eine solche Verbindung zwischen einer jeweiligen Verbindungsstruktur 104 und einer jeweiligen Lochplatte 102 kann zum Beispiel mittels einer Steckverbindung oder einer Schraubverbindung ausgebildet sein.

Die Verbindungsstrukturen 104 sind jeweils als metallisches C-Profil ausgebildet, wie am besten in Figur 3 zu erkennen ist. In dem C-Profil der jeweiligen Verbindungsstruktur 104 kann ein Kabel (nicht gezeigt) geführt werden. Die zwischen den als Lochplatte 102 ausgebildeten Seitenwänden verlaufenden Profile oder Verbindungsstrukturen 104 sind also im Wesentlichen als C-Profile ausgebildet. Diese weisen entsprechende Ausnehmungen 183 auf, um auf den Profilen bzw. Verbindungsstrukturen 104 weitere Gegenstände anzuordnen (beispielsweise eine weitere Seitenwand). Die besondere Steifigkeit eines Profils bzw. einer Verbindungsstruktur 104 ergibt sich aus dieser C-Form. Wie beschrieben, können die C-Profile zwischen den als Lochplatten 102 ausgebildeten Seitenwänden die Ausnehmungen 183 aufweisen, um von ihrer Befestigungsfunktion abgesehen zudem das Gewicht der C-Profile zu reduzieren. Zwischen den hier als C-Profile ausgebildeten Verbindungsstellen 104 können Verbindungsbleche angeordnet werden, um auf diesen Seitenwände anzuordnen. Wie Figur 1 bis Figur 3 ferner zu entnehmen ist, weisen die Verbindungsstrukturen 104, die als metallische Hohlprofile ausgebildet sind, Öffnungen bzw. Ausnehmungen 183 auf. Über diese Ausnehmungen 183 ist eine Befestigung weiterer Komponenten bzw. Bauteile eines Regals bzw. der Regalmoduleinheit 100 ermöglicht. Auch können über diese Ausnehmungen 183 Kabel in das Innere der Hohlprofile ein- oder daraus herausgeführt werden. Schließlich verringern diese Ausnehmungen 183 zusätzlich das Gewicht der Regalmoduleinheit 100.

Auch ein jeweiliges Hohlprofil bildende Kantenbereiche 136 einer jeweiligen Lochplatte 102 können ein in der Figur nicht dargestelltes Kabel aufnehmen. Genauer gesagt bilden zwei einander gegenüberliegende Längsseiten der Lochplatten 102 jeweils einen Kanal, der als mechanischer Versteifungskanal und/oder als Kabelkanal fungieren kann.

Jede der Lochplatten 102 weist eine Vielzahl von matrixartig angeordneten Löchern 124 auf. Diese können dazu dienen, eine jeweilige Verbindungsstruktur 104 und/oder einen anderen Konstituenten eines Regals 150 an der zugehörigen Lochplatte 102 zu befestigen. Wie in Figur 1 und Figur 2 dargestellt, ist eine jeweilige Verbindungsstruktur 104 mit Eckbereichen 199 der Lochplatten 102 verbunden. Alternativ kann eine Verbindungsstruktur 104 auch in einem Mittenbereich einer jeweiligen Lochplatte 102 befestigt sein (nicht gezeigt). Wie Figur 1 bis Figur 3 darüber hinaus zeigen, befinden sich Löcher 124 der Lochplatten 102 nicht nur in deren plattenartigen Zentralabschnitten 167, sondern auch in den hohlprofilartigen Abschnitten, welche die Kantenbereiche 136 bilden. Dadurch kann praktisch die gesamte Außenfläche der Lochplatten 102 zu Befestigungszwecken genutzt werden.

In einem, mehreren oder allen Eckbereichen 112 zwischen einer jeweiligen Lochplatte 102 und einer jeweiligen Verbindungsstruktur 104 kann ein jeweiliges steifigkeitserhöhendes Winkelstück 110, das bevorzugt als Dreiecksplatte ausgebildet ist, angebracht sein. Das Winkelstück 110 kann zum Beispiel aus Metall oder Kunststoff gefertigt werden. Die dreieckförmigen Winkelstücke 110 sind im gezeigten Ausführungsbeispiel in zwei Eckbereichen 112 der quaderförmigen Regalmoduleinheit 100 angebracht und weisen Ausnehmungen 163 auf. Die Ausnehmungen 163 dienen zum Beispiel dafür, die Regalmoduleinheit 100 (mittels Schrauben oder anderer Befestigungselemente) an einer Wand zu befestigen oder zu stabilisieren. Zwischen Seitenwand und Profil können also Dreiecksbleche als Winkelstücke 110 befestigt werden, um den Grundkörper bzw. die Modulregaleinheit 100 zu versteifen.

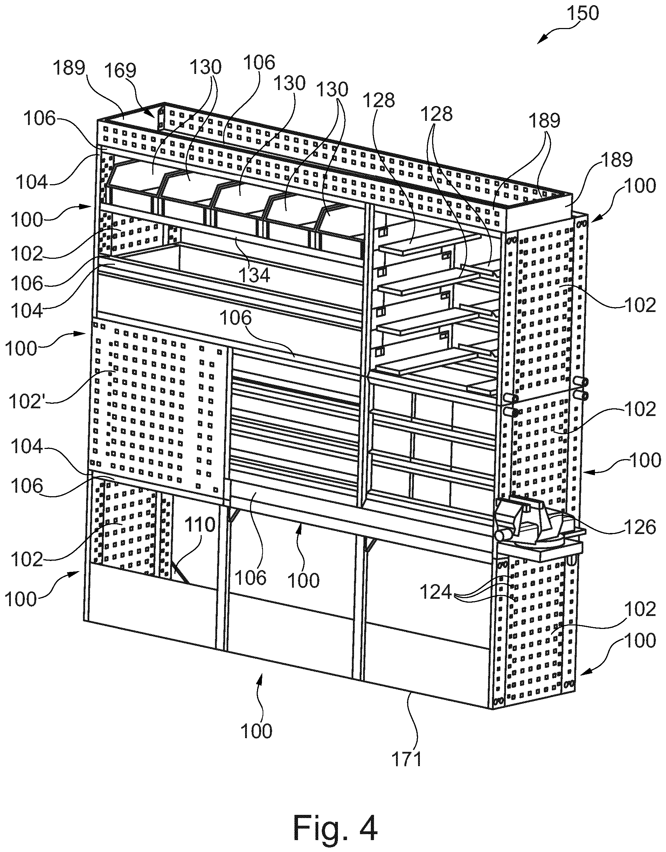

Die Regalmoduleinheit 100 weist darüber hinaus Kopplungsstrukturen 118, 120 zum Koppeln der Regalmoduleinheit 100 mit einer gleichartigen (insbesondere identischen) Regalmoduleinheit 100 auf. Diese Kopplungsstrukturen 118, 120 enthalten Einführzapfen 118, die in Form von Überständen zum Stapeln von mehreren gleichartigen Regalmoduleinheiten 100 oder zum Aufsetzen weiterer Lochplatten 102 bzw. anderer Konstituenten eines Regals 150 (vergleiche Figur 4 bis Figur 6), in Eckbereichen 116 der Lochplatten 102 in eine von außen zugängliche Aussparung 120 eines jeweiligen Hohlprofils der jeweiligen Lochplatte 102 eingeführt werden können und nach außen hin hervorstehen. Zu den Kopplungsstrukturen 118, 120 gehört also zudem auch die in Figur 3 zu erkennende Aussparung 120 einer anderen Lochplatte 102 einer anderen Regalmoduleinheit 100 oder eines anderen, entsprechend konfigurierten Konstituenten eine Regals 150. Diese Aussparung 120 kann einen solchen überstehenden Einführzapfen 118 aufnehmen, um eine formschlüssige Verbindung zwischen den beiden zu verbindenden Körpern auszubilden, die ggf. zu einer festen Verbindung wird, beispielsweise durch Verschraubung.

Figur 1 bis Figur 3 kann entnommen werden, dass die dargestellte Regalmoduleinheit 100 mit im Wesentlichen quaderförmlicher Gestalt mit vier offenen Seitenflächen (jeweils begrenzt durch zwei Verbindungsstrukturen 104 und zwei Kanten der Lochplatten 102) und zwei geschlossenen Seitenflächen (in Form der Lochplatten 102) ausgebildet ist. Entlang jeder der sechs rechteckförmigen Seitenflächen der quaderförmigen Regalmoduleinheit 100 sind jeweils genau zwei Seitenkanten als Hohlprofil und jeweils genau zwei andere Seitenkanten nicht als Hohlprofil ausgebildet. Die genau zwei pro Seitenflächen als Hohlprofil ausgebildeten Seitenkanten liegen einander jeweils parallel gegenüber. Genauer gesagt bilden die Hohlprofile gemeinsam zwei zueinander parallele rechteckige geschlossene Hohlprofilringe 187 (siehe Figur 1). Dagegen sind die nicht als Hohlprofile ausgebildeten Seitenkanten jeweils als rechtwinklig abgewinkeltes Profil 185 der Lochplatten 102 ausgebildet (siehe Figur 1). Durch diese Konfiguration wird ein außerordentlich hohes Maß an Robustheit bei gleichzeitig leichtgewichtiger Ausgestaltung und hoher Steifigkeit erreicht. Ferner kann ein großes Lagervolumen erreicht werden, das durch einen Benutzer flexibel und anwendungsspezifisch angepasst und aufgeteilt werden kann.

Die in Figur 1 dargestellte Regalmoduleinheit 100 ist also aus zwei parallel zueinander angeordneten rechteckförmigen Lochplatten 102 und vier Verbindungsstrukturen 104 aufgebaut, die zueinander parallel verlaufen und senkrecht zu den einander zugewandten Hauptflächen der Lochplatten 102 verlaufend ausgebildet sind. Die vier Verbindungsstrukturen 104 sind an ihren Endabschnitten 106 jeweils an Ecken der Lochplatten 102 befestigt, und zwar unter Verwendung von Löchern 124 in Eckbereichen der Lochplatten 102. Die als Hohlprofile, genauer gesagt C-Profile, ausgebildeten Verbindungsstrukturen 104 sind dabei mit den Versteifungskanälen in den Kantenbereichen 136 der Lochplatten 102 verbunden, so dass sich entlang annähernd des gesamten Randbereichs der quaderförmigen Figur gemäß Figur 1 verstärkende Hohlprofile befinden. Dadurch kann eine besonders stabile Regalmoduleinheit 100 erhalten werden. An der Oberseite der Regalmoduleinheit 100 ragen vier Einführzapfen 118 über die Hauptflächen der Lochplatten 102 und über die Verbindungsstrukturen 104 hinaus. In entsprechender Weise sind Einführöffnungen bzw. Aussparungen 120 an den vier Eckbereichen der quaderförmigen Struktur gemäß Figur 3 auf der Unterseite vorgesehen. Ein jeweiliger Einführzapfen 118 und eine Einführöffnung oder Aussparung 120 sind aufeinander derart angepasst, dass ein Einführzapfen 118 formschlüssig in eine Aussparung 120 eintauchen kann, wodurch mehrere Regalmoduleinheiten 100 übereinander gestapelt werden können. Lediglich an vier Kanten des im Wesentlichen quaderförmigen Körpers gemäß Figur 1 sind keine Hohlprofile gebildet, stattdessen aber umgebogene Metallkanten als abgewinkelte Profile 185. Auch diese dienen der Versteifung der Regalmoduleinheit 100, ohne den Lagerraum im Inneren der Regalmoduleinheit 100 zu reduzieren.

Figur 1 bis Figur 3 zeigen also die Regalmoduleinheit 100 als Grundkörper, die zwei Seitenwände in Form von Lochplatten 102 und vier zwischen diesen verlaufende Profile als Verbindungsstrukturen 104 aufweist. Die Seitenwände sind also als Lochplatten 102, insbesondere als metallische Lochbleche, ausgebildet. Zwei gegenüberliegende Längsseiten der Lochplatten 102 können jeweils einen Kanal aufweisen. Dieser Kanal dient zum einen der Versteifung der montierten Regalmoduleinheit 100 bzw. eines auf dieser Basis aufgebauten Regals 150. Zum anderen können in dem jeweiligen Kanal Kabel, etc., geführt werden. Ferner können an den der anderen Lochplatte 102 zugewandten Seiten des Kanals weitere Elemente des Regals befestigt werden, beispielsweise Schubladenführungen oder Regalböden. Darüber hinaus können in die oberen Enden der Kanäle Einführzapfen 118 eingesetzt werden, um das Aufsetzen eines weiteren derartigen bzw. gleichartigen Grundkörpers aus Lochplatte 102 und Verbindungsstruktur(en) 104 zu vereinfachen. Anschaulich können die Einführzapfen 118 der Vorjustage sowie der Stabilisierung dienen. Anders ausgedrückt können in die Kanäle der als Lochplatten 102 ausgebildeten Seitenwände die Führungszapfen oder Einführzapfen 118, vorzugsweise werkzeuglos, eingesetzt sein. Es kann ggf. auch eine feste Verbindung zwischen den zu verbindenden Körpern ausgebildet werden, beispielsweise durch Verschraubung.

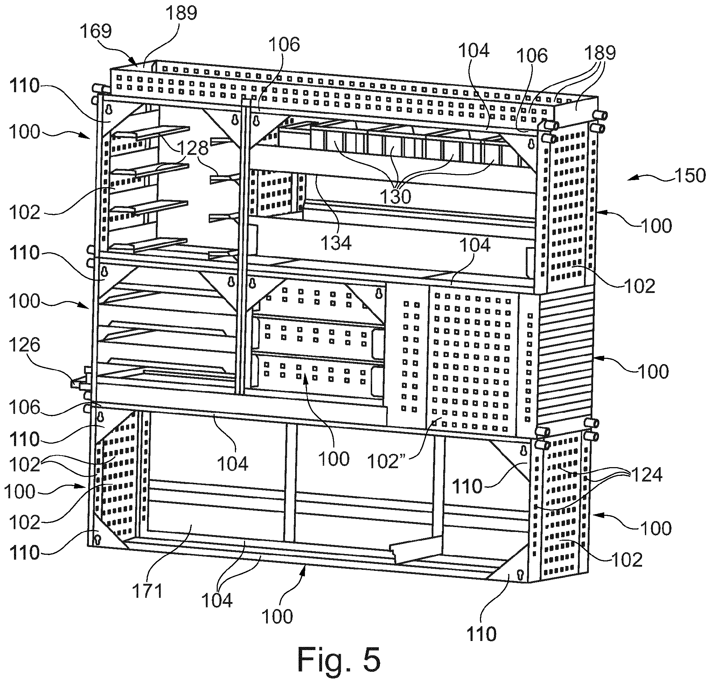

**Figur 4** zeigt eine Vorderseite eines Regals 150 gemäß einem exemplarischen Ausführungsbeispiel der Erfindung, das aus mehreren Regalmoduleinheiten 100 aufgebaut ist. **Figur 5** zeigt eine rückseitige Ansicht des Regals 150 gemäß Figur 4.

Das in Figur 4 und Figur 5 dargestellte Regal 150 weist mehrere miteinander verbundene Regalmoduleinheiten 100 mit den Merkmalen gemäß Figur 1 bis Figur 3 auf. Die einzelnen Regalmoduleinheiten 100 können dabei zum Teil innerhalb einer jeweiligen anderen der Regalmoduleinheiten 100 angeordnet sein und dadurch eine Modul-in-Modul-Anordnung bilden.

Diverse weitere Konstituenten des Regals 150 sind an den miteinander verbundenen Regalmoduleinheiten 100 angebracht. Zum Beispiel ist in Figur 4 und Figur 5 exemplarisch ein Schraubstock 126 dargestellt, der außenseitig an einer der Lochplatten 102 montiert ist. Auch weist das Regal 150 diverse Schubladenführungen 128 auf, die an Löchern 124 der Lochplatten 102 angebracht werden können. Diverse Lagerboxen 130 mit darin gelagertem Lagergut (zum Beispiel Verbrauchsmaterial wie Schrauben, Dübel oder Nägel) sind in einer jeweiligen Regalmoduleinheit 100 aufgenommen.

Zwischen oberen und unteren Endbereichen der Lochplatten 102 kann ein horizontales Regalfach 134 (oder können mehrere solche horizontalen Regalfächer, die parallel zueinander positioniert sein können) befestigt sein. In einem Bodenbereich des Regals 150 ist eine vorderseitige vertikale Abdeckplatte 171 angebracht.

Das Regal 150 gemäß Figur 4 ist aus acht Regalmoduleinheiten 100 gemäß Figur 1 und Figur 2 aufgebaut. In Löcher 124 der Lochplatten 102 können Haken eingehängt werden, an denen weitere Körper befestigt werden können. An der Oberseite des Regals 150 ist ein mit vertikalen Seitenwänden 189 umfänglich begrenztes Aufnahmevolumen 169 gebildet. Die zum Beispiel aus Kunststoff oder Karton hergestellten Lagerboxen 130 können mit Lagergut (zum Beispiel Verbrauchsmaterialien wie Schrauben oder dergleichen) aufgefüllt und von einem Benutzer bequem aus dem Regal 150 entnommen oder in dieses eingestellt werden. In die Schubladenführungen 128 können in Figur 4 nicht dargestellte Schubladenkorpusse eingesetzt werden. Eine Vorderfläche bzw. eine Rückfläche des Regals 150 gemäß Figur 4 ist mit einer jeweiligen weiteren Lochplatte 102', 102" verschlossen, die insbesondere baugleich mit Lochplatten 102 der Seitenwände ist.

Die exemplarische Darstellung in Figur 4 zeigt, dass aufgrund des modularen Charakters der Regalmoduleinheiten 100 annähernd jede beliebige Konstellation von Lagermöglichkeiten durch einen Benutzer frei kombiniert werden kann, um ein Regal 150 entsprechend den Anforderungen einer jeweiligen Applikation zu schaffen.

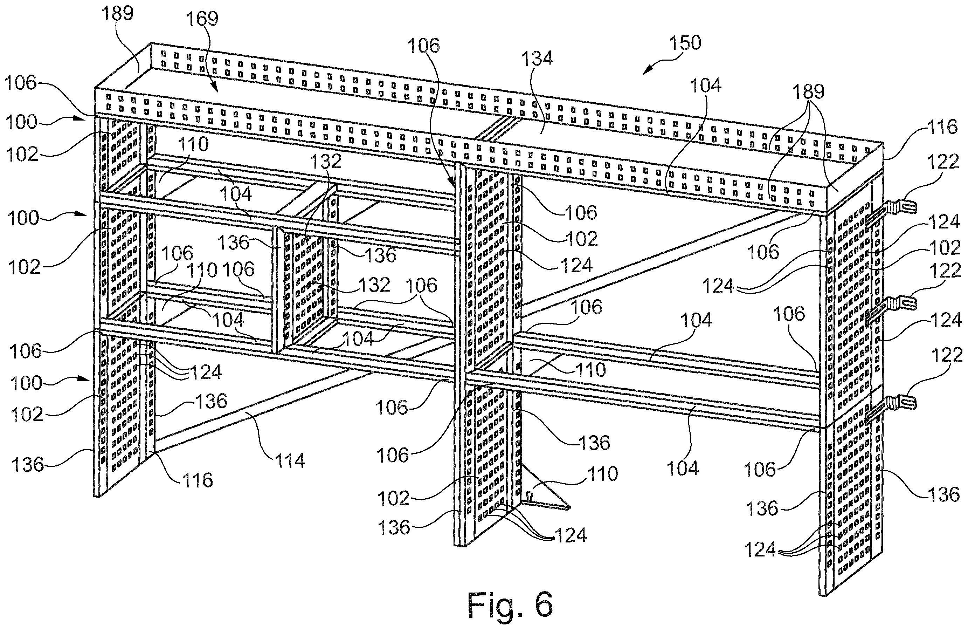

**Figur 6** zeigt ein Regal 150 gemäß einem anderen exemplarischen Ausführungsbeispiel der Erfindung, das aus mehreren Regalmoduleinheiten 100 aufgebaut ist.

Unter anderem weist das Regal 150 gemäß diesem Ausführungsbeispiel einen steifigkeitserhöhenden Querstreben 114 auf, der hier als Quergurt ausgebildet ist. Der Querstreben 114 erstreckt sich hier in diagonaler Richtung innerhalb einer Ebene, die einer Rückwandfläche des Regals 150 entspricht und sich diagonal zwischen einem unteren (hier linken) Eckbereich 116 bis zu einem oberen (hier rechten) Eckbereich 116 von zwei zugeordneten unterschiedlichen Lochplatten 102 erstreckt. Die hier diagonal ausgebildete Querstrebe 114 kann zum Beispiel aus Metall, einem Kunststoff oder einem elastischen Gurt hergestellt sein. Quer wirkende Lasten können dadurch aufgenommen, verteilt und abgefedert werden.

An vertikalen Außenflächen des Regals 150 sind in Löchern 124 jeweiliger Lochplatten 102 Haken 122 angebracht, die zum Anbringen von Körpern an der Regalmoduleinheit 100 und/oder zum Befestigen des Regals 150 (zum Beispiel an einer Wand) dienen können. Die Haken 122 können an jeweiligen Löchern 124 von jeweiligen Lochplatten 102 angebracht werden.

Bei der gemäß Figur 6 linken mittleren Regalmoduleinheit 100 ist zwischen den Endbereichen 106 der vier in horizontaler Richtung verlaufenden Verbindungsstrukturen 104 eine vertikale Zwischenwand 132 in Form einer zusätzlichen Lochplatte befestigt. Das Regal 150 gemäß Figur 6 ist aus mehreren Regalmoduleinheiten 100 aufgebaut. In einer dieser Regalmoduleinheiten 100 (siehe den oberen linken Bereich gemäß Figur 6) sind weitere Verbindungsstrukturen 104 und ist eine weitere Zwischenwand in Form einer zusätzlichen Lochplatte 102 eingefügt. Dadurch können an dieser Stelle kleinere Kompartments abgegrenzt werden.

Im oberen Bereich des Regals 150 gemäß Figur 6 ist wiederum ein Aufnahmevolumen 169 durch vertikale umlaufende Seitenwände 189 gebildet.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Regalmoduleinheit (100), wobei die Regalmoduleinheit (100) aufweist:
zwei einander gegenüberliegende Lochplatten (102) als Seitenwände;
mindestens eine senkrecht zu den Seitenwänden verlaufende Verbindungsstruktur (104) mit Endbereichen (106) zum Verbinden der Lochplatten (102); und
Kopplungsstrukturen (118, 120) zum Koppeln der Regalmoduleinheit (100) mit einer gleichartigen Regalmoduleinheit (100);
wobei zwischen den Endbereichen (106) der mindestens einen Verbindungsstruktur (104) eine, insbesondere vertikale, Zwischenwand (132), insbesondere eine zusätzliche Lochplatte, befestigt ist;
wobei entlang jeder von sechs rechteckförmigen Seitenflächen der Regalmoduleinheit (100) mindestens zwei Seitenkanten als Hohlprofil ausgebildet sind.

2. Regalmoduleinheit (100) gemäß Anspruch 1, wobei die mindestens eine Verbindungsstruktur (104) ein C-Profil aufweist.

3. Regalmoduleinheit (100) gemäß Anspruch 1 oder 2, aufweisend mindestens ein steifigkeitserhöhendes Winkelstück (110), insbesondere eine Dreiecksplatte, in einem Eckbereich (112) zwischen einer der Lochplatten (102) und einer der mindestens einen Verbindungsstruktur (104).

4. Regalmoduleinheit (100) gemäß einem der Ansprüche 1 bis 3, wobei die Kopplungsstrukturen (118, 120) mindestens einen Einführzapfen (118) aufweisen, der, insbesondere zum Koppeln, zur Vorjustage und/oder zum Stapeln von mehreren gleichartigen Regalmoduleinheiten (100), in zumindest einem Eckbereich (116) von zumindest einer der Lochplatten (102) vorgesehen ist, insbesondere dort in eine Aussparung (120) als eine andere der Kopplungsstrukturen (118, 120) eingeführt oder einführbar ist.

5. Regalmoduleinheit (100) gemäß Anspruch 4, wobei die Kopplungsstrukturen (118, 120) mindestens eine von einem Einführzapfen (118) freie Aussparung (120) in zumindest einem anderen Eckbereich (117) von zumindest einer der Lochplatten (102) aufweisen, die, insbesondere zum Koppeln, zur Vorjustage und/oder zum Stapeln von mehreren gleichartigen Regalmoduleinheiten (100), von einem Einführzapfen (118) gemäß Anspruch 4 einer anderen gleichartigen Regalmoduleinheit (100) formschlüssig in Eingriff nehmbar ist.

6. Regalmoduleinheit (100) gemäß einem der Ansprüche 1 bis 5,
wobei mindestens eine der Lochplatten (102) mindestens zehn, insbesondere mindestens dreißig, Löcher (124), insbesondere eine matrixartige Anordnung einer Vielzahl von Löchern (124), aufweist; und/oder
aufweisend mindestens eine Schubladenführung (128), die an mindestens einer der Lochplatten (102) angebracht ist, insbesondere an mindestens einem Loch (124) von mindestens einer der Lochplatten (102) angebracht ist; und/oder
wobei eine Verbindung zwischen der mindestens einen Verbindungsstruktur (104) und den Lochplatten (102) mittels einer Steckverbindung oder einer Schraubverbindung ausgebildet ist; und/oder
aufweisend mindestens eine Lagerbox (130), die in der Regalmoduleinheit (100) aufgenommen ist.

7. Regalmoduleinheit (100) gemäß einem der Ansprüche 1 bis 6,
wobei zwischen oberen und unteren Endbereichen der Lochplatten (102) mindestens ein, insbesondere horizontales, Regalfach (134) befestigt ist; und/oder
wobei die mindestens eine Verbindungsstruktur (104) mit Endbereichen und/oder Mittenbereichen der Lochplatten (102) verbunden ist; und/oder
wobei zwei einander gegenüberliegende Längsseiten der Lochplatten (102) einen als Kanal oder als Hohlprofil ausgebildeten Kantenbereich (136), insbesondere einen Versteifungskanal und/oder einen Kabelkanal, aufweisen; und/oder
ausgebildet mit im Wesentlichen quaderförmlicher Gestalt mit vier offenen und zwei im Wesentlichen geschlossenen Seitenflächen.

8. Regalmoduleinheit (100) gemäß einem der Ansprüche 1 bis 7,
wobei die zwei, insbesondere genau zwei, als Hohlprofil ausgebildeten Seitenkanten einander jeweils gegenüber liegen; und/oder
wobei die zwei, insbesondere genau zwei, als Hohlprofil ausgebildeten Seitenkanten einander parallel gegenüber liegen; und/oder
wobei die Hohlprofile zwei zueinander parallele und umfänglich geschlossene Hohlprofilringe bilden; und/oder
wobei die nicht als Hohlprofile ausgebildeten Seitenkanten als abgewinkeltes Profil, insbesondere als rechtwinklig abgewinkeltes Profil, ausgebildet sind.

9. Regal (150), aufweisend eine Mehrzahl von miteinander mittels Kopplungsstrukturen (118, 120) verbundenen Regalmoduleinheiten (100) gemäß einem der Ansprüche 1 bis 8.

10. Regal (150) gemäß Anspruch 9,
wobei eine der Regalmoduleinheiten (100) innerhalb einer anderen der Regalmoduleinheiten (100) angeordnet ist; und/oder
aufweisend mindestens einen steifigkeitserhöhenden Querstreben (114), insbesondere Quergurt, der sich diagonal zwischen Eckbereichen (116) von Lochplatten (102), insbesondere unterschiedlicher Regalmoduleinheiten (100), erstreckt.

11. Verfahren zum Montieren einer Regalmoduleinheit (100) gemäß einem der Ansprüche 1 bis 8, wobei das Verfahren aufweist:
Montieren von einander gegenüberliegenden Lochplatten (102) als Seitenwände;
Verbinden der Lochplatten (102) mit Endbereichen (106) von mindestens einer Verbindungsstruktur (104);
Vorsehen von Kopplungsstrukturen (118, 120) zum Koppeln der Regalmoduleinheit (100) mit einer gleichartigen Regalmoduleinheit (100); und
Befestigen einer, insbesondere vertikalen, Zwischenwand (132), insbesondere einer zusätzlichen Lochplatte, zwischen den Endbereichen (106) der mindestens einen Verbindungsstruktur (104);
wobei entlang jeder von sechs rechteckförmigen Seitenflächen der Regalmoduleinheit (100) mindestens zwei Seitenkanten als Hohlprofil ausgebildet sind.

12. Verfahren gemäß Anspruch 11, wobei die Lochplatten (102) vertikal angeordnet werden und/oder die mindestens eine Verbindungsstruktur (104) horizontal angeordnet wird.

13. Verwendung einer Regalmoduleinheit (100) gemäß einem der Ansprüche 1 bis 8 als Basiseinheit zum Aufbau eines Regals (150).

## Claims

1. A shelf module unit (100), wherein the shelf module unit (100) comprises:
two mutually opposite perforated plates (102) as side walls;
at least one connecting structure (104) extending perpendicularly to the side walls and having end regions (106) for connecting the perforated plates (102); and
coupling structures (118, 120) for coupling the shelf module unit (100) to a similar shelf module unit (100);
wherein an, in particular vertical, intermediate wall (132), in particular an additional perforated plate, is fastened between the end regions (106) of the at least one connecting structure (104);
wherein at least two side edges are formed as a hollow profile along each of six rectangular side surfaces of the shelf module unit (100).

2. The shelf module unit (100) according to claim 1, wherein the at least one connecting structure (104) has a C-profile.

3. The shelf module unit (100) according to claim 1 or 2, comprising at least one stiffness-increasing angle piece (110), in particular a triangular plate, in a corner region (112) between one of the perforated plates (102) and one of the at least one connecting structure (104).

4. The shelf module unit (100) according to one of claims 1 to 3, wherein the coupling structures (118, 120) comprise at least one insertion pin (118) which is provided, in particular for coupling, for pre-adjustment and/or for stacking a plurality of similar shelf module units (100), in at least one corner region (116) of at least one of the perforated plates (102), in particular is inserted or can be inserted there into a recess (120) as another of the coupling structures (118, 120).

5. The shelf module unit (100) according to claim 4, wherein the coupling structures (118, 120) comprise at least one recess (120) free of an insertion pin (118) in at least one other corner region (117) of at least one of the perforated plates (102), which recess can be engaged in a form-fitting manner, in particular for coupling, for pre-adjustment and/or for stacking a plurality of similar shelf module units (100), by an insertion pin (118) according to claim 4 of another similar shelf module unit (100).

6. The shelf module unit (100) according to one of claims 1 to 5,
wherein at least one of the perforated plates (102) comprises at least ten, in particular at least thirty, holes (124), in particular a matrix-like arrangement of a plurality of holes (124); and/or
comprising at least one drawer guide (128), which is attached to at least one of the perforated plates (102), in particular is attached to at least one hole (124) of at least one of the perforated plates (102); and/or
wherein a connection between the at least one connecting structure (104) and the perforated plates (102) is formed by means of a plug connection or a screw connection; and/or
comprising at least one storage box (130), which is accommodated in the shelf module unit (100).

7. The shelf module unit (100) according to one of claims 1 to 6,
wherein at least one, in particular horizontal, shelf compartment (134) is fastened between upper and lower end regions of the perforated plates (102); and/or
wherein the at least one connecting structure (104) is connected to end regions and/or central regions of the perforated plates (102); and/or
wherein two mutually opposite longitudinal sides of the perforated plates (102) comprise an edge region (136) formed as a channel or as a hollow profile, in particular a reinforcing channel and/or a cable channel; and/or
formed with a substantially cuboidal shape with four open and two substantially closed side surfaces.

8. The shelf module unit (100) according to one of claims 1 to 7,
wherein the two, in particular precisely two, side edges formed as a hollow profile each lie opposite one another; and/or
wherein the two, in particular precisely two, side edges formed as a hollow profile lie parallel opposite one another; and/or
wherein the hollow profiles form two hollow profile rings parallel to one another and closed circumferentially; and/or
wherein the side edges not formed as hollow profiles are formed as an angled profile, in particular as a profile angled at right angles.

9. A shelf (150), comprising a plurality of shelf module units (100) according to one of claims 1 to 8 connected to one another by means of coupling structures (118, 120).

10. The shelf (150) according to claim 9,
wherein one of the shelf module units (100) is arranged within another of the shelf module units (100); and/or
comprising at least one stiffness-increasing transverse strut (114), in particular transverse strap, which extends diagonally between corner regions (116) of perforated plates (102), in particular of different shelf module units (100).

11. A method for assembling a shelf module unit (100) according to one of claims 1 to 8, wherein the method comprises:
assembling mutually opposite perforated plates (102) as side walls;
connecting the perforated plates (102) to end regions (106) of at least one connecting structure (104);
providing coupling structures (118, 120) for coupling the shelf module unit (100) to a similar shelf module unit (100); and
fastening an, in particular vertical, intermediate wall (132), in particular an additional perforated plate, between the end regions (106) of the at least one connecting structure (104);
wherein at least two side edges are formed as a hollow profile along each of six rectangular side surfaces of the shelf module unit (100).

12. The method according to claim 11, wherein the perforated plates (102) are arranged vertically and/or the at least one connecting structure (104) is arranged horizontally.

13. Use of a shelf module unit (100) according to one of claims 1 to 8 as a base unit for constructing a shelf (150).

## Revendications

1. Unité de module d'étagère (100), dans laquelle l'unité de module d'étagère (100) présente :
deux plaques perforées opposées (102) en tant que parois latérales ;
au moins une structure de liaison (104) s'étendant perpendiculairement par rapport aux parois latérales, pourvue de zones d'extrémité (106) pour connecter les plaques perforées (102) ; et
des structures de couplage (118, 120) pour coupler l'unité de module d'étagère (100) à une unité de module d'étagère similaire (100) ;
une cloison (132), en particulier verticale, en particulier une plaque perforée supplémentaire, étant fixée entre les zones d'extrémité (106) de la au moins une structure de liaison (104) ;
dans laquelle au moins deux bords latéraux sont réalisés sous la forme d'un profilé creux le long de chacune de six surfaces latérales rectangulaires de l'unité de module d'étagère (100).

2. Unité de module d'étagère (100) selon la revendication 1, dans laquelle ladite au moins une structure de liaison (104) présente un profil en C.

3. Unité de module d'étagère (100) selon la revendication 1 ou 2, présentant au moins une pièce coudée (110) augmentant la rigidité, en particulier une plaque triangulaire, dans une zone d'angle (112) entre l'une des plaques perforées (102) et l'une de la au moins une structure de liaison (104).

4. Unité de module d'étagère (100) selon l'une quelconque des revendications 1 à 3, dans laquelle les structures de couplage (118, 120) présentent au moins un tenon d'insertion (118) qui est prévu dans au moins une zone d'angle (116) d'au moins l'une des plaques perforées (102), en particulier pour le couplage, le préajustement et/ou l'empilage de plusieurs unités de module d'étagère (100) de même type, en particulier peut être inséré ou est inséré dans un évidement (120) d'une autre des structures de couplage (118, 120).

5. Unité de module d'étagère (100) selon la revendication 4, dans laquelle les structures de couplage (118, 120) présentent au moins un évidement (120) exempt d'un tenon d'insertion (118) dans au moins une autre zone d'angle (117) d'au moins l'une des plaques perforées (102), qui peut être mis en prise par liaison de forme avec un tenon d'insertion (118) selon la revendication 4 d'une autre unité de module d'étagère (100) de même type, en particulier pour le couplage, le préajustement et/ou l'empilage de plusieurs unités de module d'étagère (100) de même type.

6. Unité de module d'étagère (100) selon l'une quelconque des revendications 1 à 5,
dans laquelle au moins une des plaques perforées (102) présente au moins dix, trous (124), en particulier au moins trente, en particulier une disposition matricielle d'une pluralité de trous (124) ; et/ou
présentant au moins un guide de tiroir (128) qui est fixé à au moins une des plaques perforées (102), en particulier à au moins un trou (124) d'au moins une des plaques perforées (102) ; et/ou
dans laquelle une liaison entre la au moins une structure de liaison (104) et les plaques perforées (102) est formée au moyen d'une liaison par enfichage ou d'une liaison à vis ; et/ou
présentant au moins une boîte de stockage (130) qui est logée dans l'unité de module d'étagère (100).

7. Unité de module d'étagère (100) selon l'une quelconque des revendications 1 à 6,
dans laquelle au moins un compartiment d'étagère (134), en particulier horizontal, est fixé entre les zones d'extrémité supérieure et inférieure des plaques perforées (102) ; et/ou
dans laquelle la au moins une structure de liaison (104) est liée aux zones d'extrémité et/ou aux zones centrales des plaques perforées (102) ; et/ou
dans laquelle deux côtés longitudinaux mutuellement opposés des plaques perforées (102) présentent une zone de bord (136) conçue comme un canal ou un profilé creux, en particulier un canal de raidissement et/ou un canal de câble ; et/ou
formée avec une configuration essentiellement parallélépipédique avec quatre surfaces latérales ouvertes et deux surfaces latérales essentiellement fermées.

8. Unité de module d'étagère (100) selon l'une quelconque des revendications 1 à 7,
dans laquelle les deux bords latéraux, en particulier exactement deux, réalisés sous la forme d'un profilé creux sont respectivement opposés l'un à l'autre ; et/ou
dans laquelle les deux bords latéraux, en particulier exactement deux, conçus sous la forme d'un profilé creux sont parallèles l'un à l'autre ; et/ou
dans laquelle les profilés creux forment deux anneaux de profilé creux parallèles l'un à l'autre et fermés circonférentiellement ; et/ou
dans laquelle les bords latéraux non réalisés sous la forme de profilés creux sont réalisés sous la forme d'un profilé coudé, en particulier sous la forme d'un profilé coudé à angle droit.

9. Étagère (150), présentant une pluralité d'unités de module d'étagère (100) selon l'une quelconque des revendications 1 à 8, reliées entre elles au moyen de structures de couplage (118, 120).

10. Étagère (150) selon la revendication 9,
dans laquelle l'une des unités de module d'étagère (100) est agencée à l'intérieur d'une autre des unités de module d'étagère (100) ; et/ou
présentant au moins une traverse (114) augmentant la rigidité, en particulier une sangle transversale, qui s'étend en diagonale entre les zones d'angle (116) des plaques perforées (102), en particulier des différentes unités de module d'étagère (100).

11. Procédé de montage d'une unité de module d'étagère (100) selon l'une quelconque des revendications 1 à 8, dans lequel le procédé comprend les étapes consistant à :
monter des plaques perforées (102) opposées l'une à l'autre en tant que parois latérales ;
lier les plaques perforées (102) aux zones d'extrémité (106) d'au moins une structure de liaison (104) ;
prévoir des structures de couplage (118, 120) pour coupler l'unité de module d'étagère (100) à une unité de module d'étagère (100) de même type ; et
fixer une cloison (132), en particulier verticale, en particulier une plaque perforée supplémentaire, entre les zones d'extrémité (106) de la au moins une structure de liaison (104) ;
dans lequel au moins deux bords latéraux sont réalisés sous la forme d'un profilé creux le long de chacune de six surfaces latérales rectangulaires de l'unité de module d'étagère (100).

12. Procédé selon la revendication 11, dans lequel les plaques perforées (102) sont agencées verticalement et/ou la au moins une structure de liaison (104) est agencée horizontalement.

13. Utilisation d'une unité de module d'étagère (100) selon l'une quelconque des revendications 1 à 8 comme unité de base pour la construction d'une étagère (150).
